Europäisches Patentamt

European Patent Office

Office européen des brevets

(19)

(11) Numéro de publication: **0 000 456**
**B1**

(12) **FASCICULE DE BREVET EUROPEEN**

(21) Numéro de dépôt: 78400034.1

(22) Date de dépôt: 23.06.78

(51) Int. Cl.³: **B 23 K 23/00, E 01 B 11/52**

(54) **Moule pour la soudure métallothermique de pièces métalliques**

(30) Priorité: 08.07.77 FR 7721158
07.06.78 FR 7817030

(43) Date de publication de la demande:
24.01.79 Bulletin 79/02

(45) Mention de la délivrance du brevet:
29.10.80 Bulletin 80/22

(84) Etats contractants désignés:
BE CH DE GB NL SE

(56) Documents cités:
DE - C - 572 591
FR - A - 1 327 977
US - A - 3 022 554
US - A - 3 113 359

(73) Titulaire: C. Delachaux
119, Avenue Louis-Roche
F - 92231 Gennevilliers (FR)

(72) Inventeur: Bommart, Patrick
4, Avenue Talma
F - 92000 Rueil-Malmaison (FR)

(74) Mandataire: Corre, Jacques Denis Paul et al
Cabinet Regimbeau 26, Avenue Kléber
F - 75116 Paris (FR)

Courier Press, Leamington Spa, England.

## Moule pour la soudure métallothermique de pièces métalliques

La présente invention a pour objet un moule pour la soudure métallothermique, en particulier aluminothermique, de pièces métalliques.

Ce type de soudure consiste à assembler deux pièces métalliques de formes identiques ou relativement voisines en coulant une certaine quantité de fluide de soudure chaud autour des abouts à souder. Pour réaliser de telles soudures, on utilise un moule, généralement en plusieurs parties, destiné à entourer les pièces à souder et pourvu d'une cavité de coulée permettant au fluide de soudure chaud de venir au contact des abouts à souder.

Ce type de soudure s'applique le plus souvent à la soudure des profilés métalliques et en particulier des rails de chemin de fer.

Dans le cas de la soudure aluminothermique, l'élaboration du fluide de soudure chaud, qui est le plus souvent de l'acier en fusion, est effectuée par la réduction d'oxydes de fer par l'aluminium.

Etant donné que le moule ne peut être parfaitement jointif à la surface des pièces métalliques et à la surface des autres parties éventuelles du moule, il est nécessaire de rendre le moule étanche avant de procéder à l'opération de soudure proprement dite.

Cette étanchéité est réalisée classiquement par lutage au moyen d'une pâte suffisamment réfractaire pour ne pas être détruite par le contact du fluide de soudure chaud. Cette pâte généralement formée de sable silicieux et d'un agglomérant, par exemple de l'argile et de l'eau ou d'autres additifs, est déposée sur le moule avant ou après sa mise en place sur les pièces à souder et avant la coulée du fluide de soudure chaud.

Ce mode d'étanchéité donne de bons résultats, mais il présente l'inconvénient d'une part d'être long à exécuter et d'autre part de nécessiter une réalisation correcte et soignée qui n'est pas toujours aisée à mettre en oeuvre sur le chantier.

On a également proposé de remplacer le lutage classique par un joint sec constitué par exemple par un cordon d'amiante ou même par un cordon d'une matière organique. De tels joints présentent l'inconvénient de dégager à chaud, au contact du fluide de soudure chaud, de la vapeur d'eau pouvant occasionner des soufflures dans la soudure et nuire par conséquent à la qualité de la soudure obtenue.

Pour illustrer l'état antérieur de la technique concernant les moules en plusieurs parties pour la soudure métallothermique de pièces métalliques, comportant une matière d'étanchéité, on peut citer les documents suivants:

Le brevet DE - C - 572 591 qui décrit un moule dont les bords sont chanfreinés vers l'extérieur et pourvus d'une matière d'étanchéité telle que de l'argile, le brevet US - A -

3 113 359 qui décrit un moule comportant une matière d'étanchéité, telle qu'une laine ou un feutre céramique, placée dans des évidements du moule et le brevet FR - A - 1 327 977 qui décrit un moule comportant une matière d'étanchéité constituée par des blocages céramique alumine silice ou des blocages fibreux réfractaires.

On peut citer par ailleurs le brevet US - A - 3 022 554 qui décrit un moule en plusieurs parties comportant des moyens aptes à assurer le positionnement relatif de deux parties de moule entre elles grâce à des tenons de l'une des parties de moule aptes à coopérer avec des évidements correspondants de l'autre partie de moule.

L'invention vise à éviter les inconvénients précités en proposant un moule prêt à l'emploi et assurant automatiquement l'étanchéité voulue dès sa mise en place sur les pièces à souder.

L'invention concerne plus particulièrement un moule en plusieurs parties destiné à la soudure métallothermique de deux pièces métalliques en ménageant autour des abouts des pièces à souder une cavité de coulée destinée à recevoir une certaine quantité de fluide de soudure chaud, dans lequel l'une au moins des surfaces du moule, destinée à venir en contact avec une pièce à souder ou éventuellement avec une autre partie du moule, comporte une saillie présentant un flanc incliné vers l'extérieur par rapport à la cavité de coulée, ladite saillie étant pourvue d'une matière d'étanchéité, dont la caractéristique essentielle réside dans le fait que la matière d'étanchéité est un joint d'étanchéité constitué par un ruban d'une matière compressible à faible perte au feu dont l'une des faces est collée sur ladite saillie.

Par l'expression "à faible perte au feu", on entend signifier que le matière compressible constituant le joint d'étanchéité ne dégage que peu de gaz par chauffage ou par réaction avec le fluide de soudure chaud et que l'expérience a démontré que ce faible dégagement n'occasionne pas de soufflures.

Une matière répondant à ces caractéristiques sera avantageusement un feutre d'origine minérale, par exemple constitué par des silicates tels que des silicates d'alumine contenant éventuellement des oxydes de chrome, des silicates de magnésie, des silicates doubles, tels que des silicates de soude et de fer du type chrosidolite à 3% d'eau de cristallisation et des silicates de magnésie et de fer du type amosite à 3% d'eau de cristallisation, etc. De tels feutres minéraux ne dégagent à haute température qu'environ 2 à 5% de leur poids, alors qu'une amiante de type chrysolite en dégage environ 10 à 20%.

Des feutres de ce type sont disponibles dans le commerce et peuvent être obtenus auprès de fabricants tels que Johns Manville, FERLAM, S.E.P.R. (Société Européenne de Produits Réfractaires).

Pour assurer une étanchéité particulièrement avantageuse, les feutres employés dans les moules de l'invention devront avoir une densité d'environ 50 à 200 kg/m$^3$ et de préférence d'environ 100 à 200 kg/m$^3$.

Le ruban est collé sur la saillie, soit au moyen d'une colle organique, soit au moyen d'une colle minérale. Dans le cas d'une colle organique, on dispose un jonc de colle sur une partie de la saillie située nettement à l'extérieur par rapport à la cavité du moule, de manière à éviter que la colle dégage des gaz dans la cavité de coulée. Dans le cas d'une colle minérale, on peut déposer une couche de colle sur toute la saillie.

Dans un mode particulièrement avantageux de réalisation de l'invention, la face du ruban, qui est opposée à la face collée sur la saillie, est revêtue d'une feuille métallique malléable, par exemple d'une feuille d'aluminium. Cette feuille est de préférence collée sur la face opposée du ruban, soit au moyen d'une couche d'une colle organique disposée sur une partie nettement extérieure de la face opposée par rapport à la cavité de coulée, pour les mêmes raisons que précédemment, soit au moyen d'une couche d'une colle minérale disposée sur toute la face du ruban.

Comme colle minérale, on peut utiliser par exemple une colle pour noyaux de fonderie telle que la colle "CORSY 9A" de la Société FOSECO ou la colle "K 3" de la Société BONIFACE.

Cette feuille métallique offre le triple avantage d'assurer la protection du feutre, de conférer de la rigidité au joint et par conséquent de pouvoir préformer celui-ci, et finalement d'empêcher le bourrage du feutre lors de la mise en place du moule, surtout dans les portions de pièces à souder parallèles ou faiblement inclinées par rapport à la direction de mise en place du moule sur les pièces, ce qui est important dans le cas des rails.

Bien que l'étanchéité entre les différentes parties du moule et les pièces à souder puisse être assurée uniquement par collage de joints sur des saillies, la présente invention propose dans un autre mode de réalisation un moule dans lequel les parties du moule sont conformées de manière à assurer l'étanchéité entre elles, dans la région au-dessus de la cavité de coulée, sans nécessiter d'apport de matériau d'étanchéité.

Il n'est ainsi pas nécessaire de faire appel à un matériau d'étanchéité dans la région au-dessus de la cavité de coulée, c'est-à-dire dans une région où l'étanchéité ne présente pas un caractère aussi critique que dans la région située autour de la cavité de coulée.

Ce mode de réalisation offre également l'avantage d'assurer en même temps le positionnement des parties de moules entre elles, tout en créant un évent pour l'évacuation de l'air au moment de la coulée.

A cette fin, l'invention prévoit que les parties de moule comportent, dans leurs portions en contact entre elles au-dessus de la cavité de coulée, des surfaces emboîtables assurant le positionnement et l'étanchéité de ces portions entre elles.

Selon une particularité de l'invention, chacune des surfaces emboîtables comporte une surface plane de contact pourvue d'un bourrelet et d'une rainure aptes à coopérer respectivement avec une rainure et un bourrelet de la surface plane de contact d'une autre partie de moule.

Le bourrelet et la rainure d'une surface plane de contact sont de préférence disposées de façon symétrique par rapport à un évidement central débouchant dans la surface plane de contact en sorte que deux parties de moules identiques puissent être associées par coopération de bourrelet de l'une avec la rainure de l'autre, et inversement, les évidements respectifs constituant ensemble un bassin de coulée apte à diriger le fluide de soudure chaud dans la cavité de coulée.

Pour assurer l'étanchéité du moule de l'invention autour de la cavité de coulée, il est possible de combiner un mode d'étanchéité obtenu par collage de joints sur des saillies à un mode d'étanchéité classique obtenu par lutage de pâte réfractaire.

Bien que le moule de l'invention puisse être utilisé dans la soudure de pièces métalliques quelconques, il trouve une application particulièrement intéressante dans la soudure des rails de chemin de fer.

D'autres caractéristiques et avantages de l'invention seront mieux compris à la lecture du complément de description qui va suivre à propos de trois exemples non limitatifs de moules selon l'invention appliqués à la soudure de rails de chemin de fer et en référence aux dessins annexés, sur lesquels:

la figure 1 représente une section partielle d'un moule selon l'invention dont une surface de contact présente une saillie revêtue d'un joint d'étanchéité avant compression de ce dernier;

la figure 2 représente une vue analogue à celle de la figure 1 après compression partielle du joint;

la figure 3 représente une vue analogue à celle de la figure 2 après compression totale du joint;

la figure 4 représente une vue en perspective montrant un moule en trois parties dans son application à la soudure de deux rails de chemin de fer;

la figure 5 représente une vue en coupe d'une partie du moule de la figure 4;

la figure 6 est une vue de face d'un autre moule en trois parties, destiné à la soudure de rails de chemin de fer, dans lequel l'étanchéité autour de la cavité de coulée est assurée par collage d'un joint et dans lequel l'étanchéité au-dessus de la cavité de coulée est assurée par des surfaces emboîtables;

la figure 7 est une vue de côté intérieur d'un demi-moule latéral du moule de la figure 6;

la figure 8 est une vue de dessus du moule de la figure 6; et

la figure 9 est une vue du côté intérieur d'un demi-moule analogue à celui de la figure 7, dans lequel l'étanchéité autour de la cavité de coulée est assurée par lutage au moyen d'une pâte réfractaire.

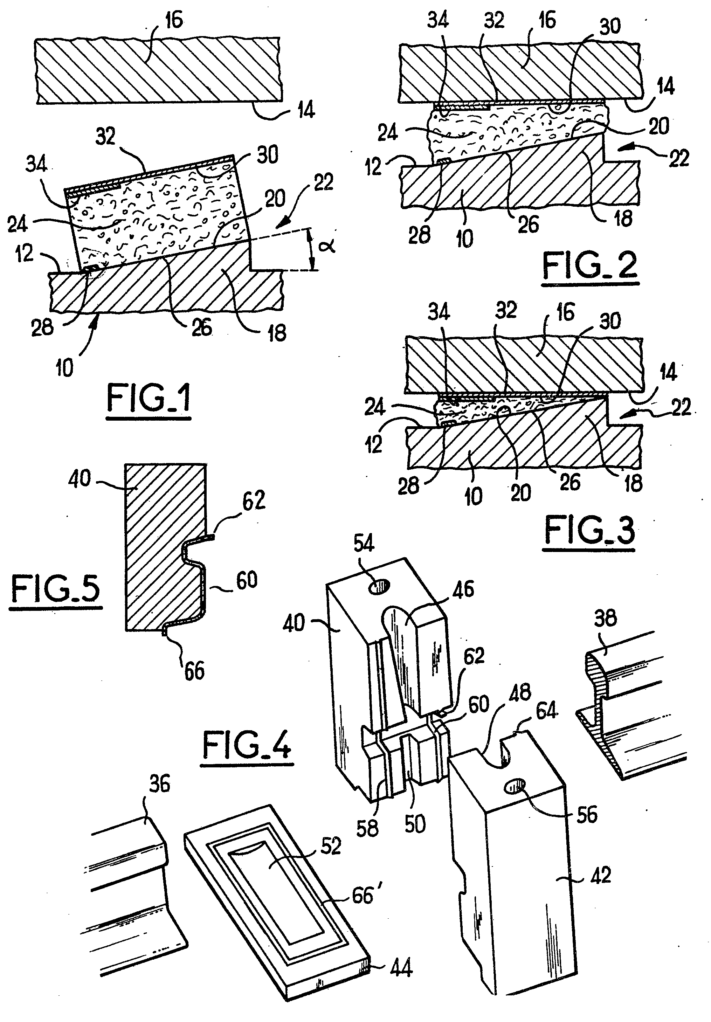

On a représenté sur la figure 1 un moule 10 dont la surface 12 destinée à venir en contact avec la surface 14 d'une pièce métallique à souder (ou d'une autre partie de moule) 16 comporte une saillie 18 formant partie intégrante du moule. Cette saillie 18 présente un flanc 20 incliné d'un angle α par rapport à la surface 12. Le flanc 20 est incliné vers l'extérieur par rapport à la cavité de coulée 22 (située à la droite de la saillie 18 sur la figure 1). L'angle α est un angle aigu pouvant avoir par exemple une valeur de 10°, bien que cette valeur ne soit pas déterminante.

Un ruban de feutre compressible à faible perte au feu 24 est collé par sa face 26 sur le flanc incliné 20 de la saillie 18 au moyen d'un jonc de colle 28 disposé sur une partie du flanc 20 située nettement à l'extérieur par rapport à la cavité 22 du moule. Sur la face 30 du ruban opposée à la face 26 est collée une feuille d'aluminium 32, de même largeur que le ruban de feutre, au moyen d'une couche de colle 34 déposée nettement à l'extérieur de la face 30 par rapport à la cavité de coulée 22.

La figure 2 représente le joint partiellement comprimé après serrage du moule 10 contre la pièce métallique (ou la partie de moule) 16 et la figure 3 représente le même joint totalement comprimé après serrage total du moule.

Du fait de l'inclinaison du flanc 20 de la saillie 18, le ruban 24 se trouve plus comprimé sur le côté le plus proche de la cavité de coulée 22 que sur le côté le plus éloigné de la cavité de coulée. Dans de telles conditions la force appliquée au serrage agit essentiellement sur une surface très faible et a donc une efficacité de serrage considérable. De plus, l'inclinaison du flanc 20 de la saillie 18 concourt à empêcher tout dégagement de gaz dans la cavité de coulée.

Il convient de remarquer qu'il n'est pas nécessaire que le ruban de feutre soit comprimé au maximum, comme représenté à la figure 3, pour assurer l'étanchéité lorsqu'on applique un moule selon l'invention sur des pièces dont le profil n'a pas exactement les cotes nominales pour lesquelles le moule est prévu. En effet, certaines zones du ruban de feutre seront très comprimées et d'autres moins comprimées, mais, à moins que le profil des pièces à souder ne sorte largement de la fourchette de tolérance commerciale du type de profils pour lequel le moule est prévu, ces zones moins comprimées le seront encore assez pour assurer l'étanchéité requise.

A titre d'exemple, on observera qu'un feutre de 6 mm d'épaisseur ayant une densité d'environ 150 kg/m³ assure déjà l'étanchéité lorsqu'il se trouve comprimé à une épaisseur de 2,5 mm.

Le moule de l'invention trouve une application particulièrement avantageuse à la soudure de rails de chemin de fer comme représenté à la figure 4.

On a représenté sur la figure 4, en perspective éclatée, deux rails de chemin de fer 36 et 38 destinés à être soudés par leurs abouts respectifs au moyen d'un moule de coulée comprenant deux parties latérales 40 et 42 identiques et une sole 44. Les parties latérales 40 et 42 sont destinées à être appliquées de part et d'autre des rails 36 et 38 en recouvrant les abouts à souder. La sole 44 est destinée à être appliquée sous les rails 36 et 38 et sous les parties latérales 40 et 42 du moule. Les parties de moule 40 et 42 présentent un profil correspondant à celui des rails de manière à en épouser la forme. Les parties de moule 40 et 42 comportent des évidements respectifs 46 et 48 aptes à former, une fois les parties de moule 40 et 42 réunies, un entonnoir apte à amener le fluide de soudure chaud dans l'espace intercalaire compris entre les deux rails. L'évidement 46 se prolonge par un évidement 50 facilitant l'accès du fluide de soudure chaud au fond du moule. L'évidement 48 de la partie de moule 42 se prolonge par un évidement similaire (non visible sur la figure 4).

La sole 44 comporte un évidement 52 favorisant l'arrivée du fluide de soudure chaud sous les deux rails au niveau de la jonction de leurs abouts. Les parties de moule 40 et 42 sont par ailleurs munies respectivement de pipes de remontée 54 et 56 permettant de chasser vers l'extérieur l'air qui est emprisonné dans le moule au fur et à mesure de la coulée du fluide de soudure chaud.

Les évidements précités des parties de moule 40 et 42 et de la sole 44 constituent la cavité de coulée dont il a été fait référence plus haut.

L'étanchéité entre les différentes parties du moule et les deux rails est réalisé au moyen de joints tels que celui décrit précédemment en référence aux figures 1 à 3, c'est-à-dire d'un joint formé d'un ruban de feutre revêtu d'une feuille d'aluminium et collé sur une saillie à flanc incliné vers l'extérieur par rapport à la cavité de coulée.

La partie de moule 40 est munie, sur sa surface destinée à venir en contact avec les deux rails 36 et 38 et avec la partie de moule 42, d'un joint 58 et d'un joint 60 disposés respectivement de part et d'autre de la cavité de coulée. Le joint 58 est collé sur une saillie présentant un flanc incliné vers l'extérieur par rapport aux évidements 46 et 50, suivant toute la hauteur du côté de la surface de contact précitée qui apparaît à gauche sur la figure 4. Le joint 60 est collé, sur une saillie présentant un flanc incliné vers l'extérieur par rapport à l'évidement 50, suivant une hauteur du côté de la surface de contact précitée, apparaissant à droite sur la figure 4, qui correspond à la portion de ladite surface venant s'appliquer sur le rail 38. L'extrémité supérieure du joint 60 se termine par un prolongement 62 dépassant de la saillie sur laquelle il est collé et ayant par exemple une longueur de 5 à 10 mm, qui est destiné à empêcher tout risque de fuite du fluide de soudure à la jonction des deux parties de moule 40 et 42 au-dessus du rail 38. Les extrémités inférieures des joints 58 et 60 se terminent par des prolongements similaires (non visibles sur la figure 4) destinés à empêcher tout risque de fuite du fluide de soudure à la jonction de la partie de moule 40 avec la sole 44. En se référant plus particulièrement à la figure 5, le joint 60 de la partie de moule 40 se termine à son extrémité supérieure par le prolongement 62 précité et à son extrémité inférieure par un prolongement 66. La partie de moule 42 est munie de deux joints similaires dont seule l'extrémité supérieure du joint 64 (qui est l'homologue du joint 58 de la partie de moule 40) est visible sur la figure 4. Les extrémités supérieures des joints 58 et 64 ne comportent pas de prolongements étant donné que l'étanchéité à cet endroit du moule ne s'avère pas essentielle.

On remarquera que, lors de l'assemblage des deux parties de moule 40 et 42, la partie supérieure du joint 64 assure l'étanchéité avec la partie supérieure de la surface de contact de la partie de moule 40 qui n'est pas munie de joint et qu'il en est de même pour la partie supérieure du joint 58 de la partie de moule 40.

La sole 44 est revêtue d'un joint d'étanchéité 66' affectant la forme d'un cadre rectangulaire, pouvant être obtenu par exemple par découpe à l'emporte pièce, entourant l'évidement 52. Le joint d'étanchéité 66' est collé sur une saillie de pourtour rectangulaire qui présente un flanc incliné vers l'extérieur par rapport à l'évidement 52.

On comprendra facilement d'après la figure 4 que lorsque les parties de moules 40 et 42 et la sole 44 sont pressées et maintenues les unes contre les autres et contre les deux rails, l'étanchéité du moule au niveau de la cavité de coulée est parfaitement réalisée.

Il suffit alors d'introduire le fluide de soudure chaud au moyen d'un creuset débouchant dans l'entonnoir de coulée formé par les évidements 46 et 48.

Les joints d'étanchéité collés sur les différentes parties des moules selon l'invention seront avantageusement mis en place en usine après fabrication des moules de manière à éviter d'avoir à coller les joints sur le chantier immédiatement avant l'opération de soudure.

En procédant ainsi, on pourra économiser un temps non négligeable et se dispenser de recourir à la main-d'oeuvre qualifiée nécessaire à la réalisation des opérations de lutage classiques.

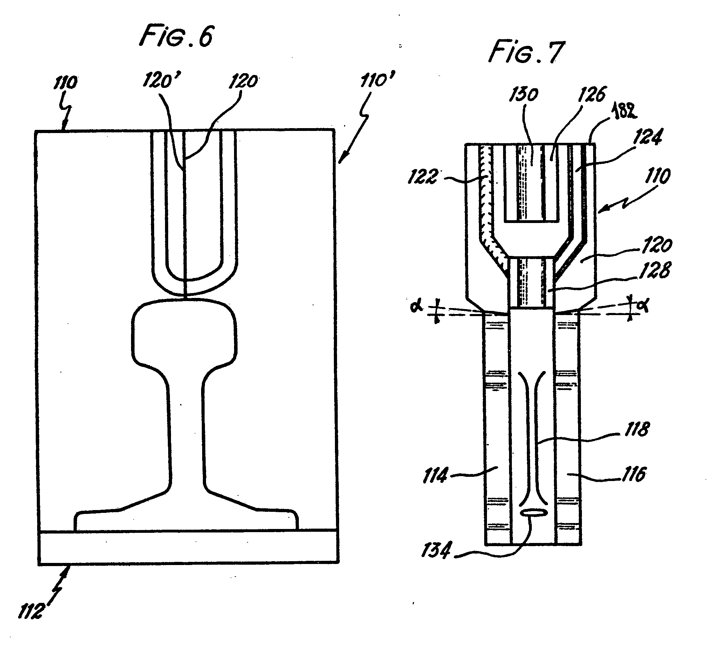

Le moule représenté sur la figure 6 se compose de deux demi-moules latéraux 110 et 110' identiques et d'une sole 112 et est destiné à être utilisé dans la soudure métallothermique de deux abouts de rails de chemin de fer. Les demi-moules 110 et 110' sont destinés à être appliqués de part et d'autre des rails en recouvrant les abouts à souder et comportent un profil intérieur correspondant à un demi profil de rail. La sole 112 est destinée à être appliquée sous les rails et sous les demi-moules 110 et 110'.

L'étanchéité autour des abouts à souder, dans la région de la cavité de coulée, est assurée par collage d'un joint d'étanchéité constitué par un ruban d'une matière compressible à faible perte au feu, tel que décrit précédemment.

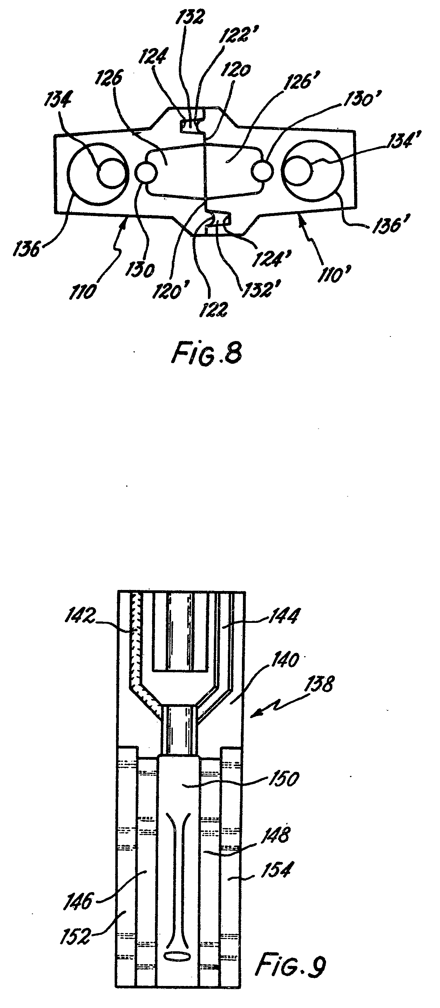

Ainsi, le demi-moule 110 (cf figure 7) comporte sur sa face destinée à venir en contact avec les demi-profils des rails à souder deux saillies 114 et 116 disposées respectivement de part et d'autre d'un évidement 118, destiné à constituer la cavité de coulée avec l'évidement correspondant du demi-moule 110'. Les deux saillies 114 et 116 présentent chacune un flanc incliné d'un angle $\alpha$ vers l'extérieur par rapport à l'évidement 118 et sont destinées à recevoir par collage un joint d'étanchéité. Un joint est également collé sur la sole 112 autour de la cavité de coulée.

Au-dessus de la cavité de coulée, c'est-à-dire au-dessus des rails à souder, les demi-moules 110 et 110' sont en contact entre eux par des surfaces planes respectives 120 et 120' qui sont pourvues de reliefs permettant leur emboîtement pour assurer à la fois le positionnement des deux demi-moules 110 et 110' et leur étanchéité dans la région des surfaces de contact 120 et 120'.

Les reliefs de la surface 120 comprennent un bourrelet 122 et une rainure 124 aptes à coopérer respectivement avec la rainure 124' et le bourrelet 122' correspondants de la surface 120' du demi-moule 110'.

Le bourrelet 122 et la rainure 124 sont disposés de façon symétrique par rapport à un évidement 126 de manière que lorsque les deux demi-moules sont réunis, l'évidement 126 forme avec l'évidement 126' correspondant un bassin de coulée communiquant avec la cavité de coulée par l'intermédiaire d'une chambre formée de deux évidements 128 et 128'.

Ce bassin de coulée peut être pourvu d'un orifice central muni d'un bouchon de coulée amovible qui peut être enlevé pour permettre le passage d'un chalumeau dans le cas où l'on effectue une soudure avec préchauffage.

La communication entre les évidements 126 et 128 et entre les évidements 126' et 128' est assurée respectivement par des alésages 130 et 130'.

Le bourrelet 122 et la rainure 124 présentent une forme générale constituée de deux segments linéaires formant un angle entre eux.

De plus, le rainure 124 débouche d'une part dans l'évidement 128 et d'autre part dans la face supérieure 182 du demi-moule 110. La profondeur de la rainure 124 est supérieure à la hauteur du bourrelet 122 pour permettre de former, lorsque les demi-moules sont réunis, un évent 132 et un évent 132' (cf figure 8) permettant l'évacuation d'air au moment de la coulée du fluide de soudure.

Le demi-moule 110 comporte en outre une pipe de remontée formée par un conduit cylindrique de petit diamètre 132 débouchant dans un conduit cylindrique de plus grand diamètre 136 qui sert de réceptacle à l'excès du fluide de soudure qui a au préalable réchauffé les deux abouts de rails.

Comme on peut le constater sur les figures 7 et 8, les demi-moules 110 and 110' sont plus larges au niveau des surfaces de contact 120 et 120' pour permettre un meilleur contact entre ces deux demi-moules.

On a représenté sur la figure 9 la face intérieure d'un demi-moule 138 dont la partie supérieure est analogue à celle du demi-moule 110 de la figure 7 et dont la partie inférieure est conformée de manière à assurer l'étanchéité par lutage. Ainsi, la face intérieure du demi-moule 138 comporte une surface plane 140 munie d'un bourrelet 142 et d'une rainure 144 réalisés comme indiqué précédemment en référence aux figures 6 à 8.

Par ailleurs, cette face intérieure comporte deux protubérances 146 et 148 disposées de part et d'autre d'un évidement 150 destiné à constituer la cavité de coulée avec l'évidement correspondant d'un demi-moule identique.

Ces deux protubérances 146 et 148 présentent un contour correspondant à celui d'un demi-profil de rail et sont munies respectivement de gorges 152 et 154 destinées à l'application de pâte à luter.

Dans le cas d'un moule comportant deux demi-moules du type de celui représenté à la figure 9, l'étanchéité entre la partie inférieure des deux demi-moules et la sole sera effectuée par collage d'un joint réfractaire sur la sole.

Les différentes parties des moules de l'invention sont réalisées de manière classique à partir d'un mélange à base de sable aggloméré et durci.

## Revendications

1 Moule en plusieurs parties destiné à la soudure métallothermique de deux pièces métalliques en ménageant autour des abouts des pièces à souder une cavité de coulée destinée à recevoir une certaine quantité de fluide de soudure chaud, dans lequel l'une au moins des surfaces du moule, destinée à venir en contact avec une pièce à souder ou éventuellement avec une autre partie du moule, comporte une saillie (18) présentant un flanc (20) incliné vers l'extérieur par rapport à la cavité de coulée (22), ladite saillie (18) étant pourvue d'une matière d'étanchéité, caractérisé par le fait que la matière d'étanchéité est un joint d'étanchéité (24) constitué par un ruban d'une matière compressible à faible perte au feu, en·particulier un feutre d'origine minérale, dont l'une des faces (26) est collée sur ladite saillie (18).

2. Moule selon la revendication 1, caractérisé par le fait que la face (30) du ruban, opposée à la face (26) collée sur la saillie (18), est revêtue d'une feuille métallique malléable (32), en particulier d'une feuille d'aluminium, qui est collée sur ladite face opposée (30) du ruban.

3. Moule selon l'une des revendications 1 et 2, caractérisé par le fait que les parties de moule (110, 110') comportent dans leurs portions en contact entre elles, au-dessus de la cavité de coulée, des surfaces emboîtables assurant le positionnement et l'étanchéité de ces portions entre elles, chacune des surfaces emboîtables comportant une surface plane de contact (120, 120') pourvue d'un bourrelet (122 122') et d'une rainure (124, 124') aptes à coopérer respectivement avec une rainure (124', 124) et un bourrelet (122', 122) de la surface plane de contact (120', 120) d'une autre partie de moule (110', 110).

4. Moule selon la revendication 3, caractérisé par le fait que le bourrelet (122, 122') et la rainure (124, 124') d'une surface plane de contact (120, 120') sont disposés de façon symétrique par rapport à un évidement central (126, 126') débouchant dans la surface plane de contact en sorte que deux parties de moules identiques (110, 110') puissent être associées par coopération du bourrelet (122, 122') de l'une avec la rainure (124, 124') de l'autre, et inversement, les évidements respectifs (126, 126') constituant ensemble un bassin de coulée apte à diriger le fluide de soudure chaud dans la cavité de coulée.

5. Moule selon la revendication 4, caractérisé par le fait que l'une des extrémités de la rainure (124, 124') débouche dans l'évidement central (126, 126') et que l'autre extrémité de la rainure (124, 124') débouche à l'extérieur du moule, la profondeur de la rainure (124, 124') étant supérieure à la hauteur du bourrelet (122, 122') pour permettre de former, lorsque la rainure (124, 124') d'une partie de moule (110, 110') reçoit un bourrelet (122', 122) d'une autre partie de moule (110', 110), un évent (132, 132') permettant l'évacuation d'air au moment de la coulée du fluide de soudure.

## Claims

1. A mould in several parts for the metallothermic welding of two metal items together by arrangement around butts of the items to be welded to define a pouring cavity adapted to receive a quantity of hot welding-fluid, wherein at least one of the faces of the mould, which will contact either one of the items to be welded or possibly another part of the mould, comprises a projection (18) which presents a sloping side (20) towards the exterior of the pouring cavity (22), said projection (18) being fitted with a sealing material, characterized in that said sealing material is a sealing joint (24) constituted by a strip of a compressible material which is little affected by heat, especially a felt of mineral origin, a face (26) of the strip being stuck onto said projection (18).

2. A mould as claimed in claim 1, characterized in that the face (30) of the strip, opposed to the face (26) stuck onto the projection (18), is coated with a malleable metal foil (32), especially an aluminium foil, which is stuck onto said opposed face (30) of the strip.

3. A mould as claimed in any one of claims 1 and 2, characterized in that the mould parts (110, 110') comprise, in those portions which are in contact with each other, above the pouring cavity, interlocking surfaces which ensure the location and staunchness of that part in respect of each other, each interlocking surface comprising a flat contact-surface (120, 120') provided with a ridge (122, 122') and a groove (124, 124') with which a groove (124', 124) and a ridge (122', 122) respectively on the flat surface (120', 120) of another mould part (110', 110) cooperate.

4. A mould as claimed in claim 3, in which the ridge (122, 122') and the groove (124, 124') of a flat contact-surface are disposed symmetrically in relation to a central slot (126, 126') opening out upon said flat contact-surface whereby two identical mould parts (110, 110') may be associated by cooperation of the ridge (122, 122') of one mould part with the groove (124, 124') of the other mould part, and conversely, the respective central slots (126, 126') forming together a pouring opening for directing hot welding-fluid into the pouring cavity.

5. A mould as claimed in claim 4, in which one of the ends of the groove (124, 124') opens out upon the central slot (126, 126') and the other end of the groove (124, 124') opens outside the mould, the depth of the groove (124, 124') being greater than the height of the ridge (122, 122') so as to permit the formation when the groove (124, 124') of a mould part (110, 110') receives the ridge (122', 122) of another mould part (110', 110), of a vent (132, 132') for the evacuation of air when welding-fluid is poured into the pouring cavity.

## Patentansprüche

1. Mehrteilige Form, die zum Metallthermitschmelzschweißen zweier Metallstücke bestimmt ist, indem man um die Enden der zu verschweißenden Stücke einen Gußhohlraum vorsieht, der dazu bestimmt ist, eine gewisse Menge an heißem Schweißmittel aufzunehmen und bei der wenigstens eine der Formflächen, die in Berührung mit einem zu schweißenden Stück oder eventuell in Berührung mit einem anderen Teil der Form kommen sollen, eine Erhebung (18) trägt, die eine hinsichtlich des Gußhohlraums (22) nach außen geneigte Flanke (20) hat, wobei diese Erhebung 18 mit einer Dichtungsmasse versehen ist, dadurch gekennzeichnet, daß die Dichtungsmasse ein Dichtungsring (24) ist, der aus einem Streifen eines kompressiblen, glühverlustarmen Materials, insbesondere aus einem Filz anorganischen Ursprungs besteht, dessen eine Fläche (26) auf dieser Erhebung (18) aufgebracht ist.

2. Form nach Anspruch 1, dadurch gekennzeichnet, daß die Fläche (30) des Streifens, die der auf der Erhebung (18) aufgebrachten Fläche (26) gegenüberliegt, mit einer formbaren Metallfolie (32), insbesondere einer Aluminiumfolie, überzogen ist, die auf dieser gegenüberliegenden Fläche (30) des Streifens aufgebracht ist.

3. Form nach einem der Ansprüche 1 und 2, dadurch gekennzeichnet, daß die Teile (110, 110') der Form an ihren miteinander in Berührung stehenden Abschnitten über dem Gußhohlraum zusammenlegbare Flächen tragen, die das Aufsetzen und die Dichtung dieser Abschnitte untereinander sicherstellen, und daß jede zusammenlegbare Fläche eine ebene Berührungsfläche (120, 120') aufweist, die mit einer Wulst (122, 122') und einer Kehle (124, 124') versehen ist, die jeweils mit einer Kehle (124', 124) und einer Wulst (122', 122) der ebenen Berührungsfläche (120', 120) eines anderen Teils (110', 110) der Form zusammenarbeiten können.

4. Form nach Anspruch 3, dadurch gekennzeichnet, daß die Wulst (122, 122') und die Kehle (124, 124') einer ebenen Berührungsfläche (120, 120') bezüglich einer Mittelaussparung (126, 126') symmetrisch angeordnet sind, die in die ebene Berührungsfläche derart mündet, daß zwei identische Formteile (110, 110') durch das Zusammenarbeiten von der Wulst (122, 122') an dem einen Teil mit der Kehle (124, 124') am anderen Teil und umgekehrt verbunden werden können, und daß die jeweiligen Aussparungen (126, 126') zusammen eine Gußmulde bilden, die das heiße Schweißmittel in den Gußhohlraum lenken kann.

5. Form nach Anspruch 4, dadurch gekennzeichnet, daß eines der Enden der Kehle (124, 124') in die Mittelaussparung (126, 126') mündet, und daß das andere Ende der Kehle (124, 124') an der Außenseite der Form mündet, daß die Teile der Kehle (124, 124') größer als die Höhe der Wulst (122, 122') ist, um einen Abzugsspalt (132, 132') zu bilden, wenn die Kehle (124, 124') eines Formteils (110, 110') eine Wulst (122', 122) eines anderen Formteils (110', 110) aufnimmt, wobei der Abzugsspalt (132, 132') beim Eingießen des Schweißmittels den Luftabzug gestattet.

0 000 456

FIG_1

FIG_2

FIG_3

FIG_4

FIG.5

## Fig.6

## Fig.7

0 000 456

FiG.8

FiG.9

3